# EUROPEAN PATENT APPLICATION

(11) **EP 4 818 673 A1**
(43) Date of publication of application: **07.10.2026**
(21) Application number: 24897011.3
(22) Date of filing: 26.08.2024
(51) Int. Cl.: G01N 21/01, G01N 35/00

(54) **DETECTION DEVICE FOR LIGHT EMISSION ANALYSIS, AND AUTOMATED ANALYZER**

(30) Priority: 27.11.2023 JP 2023199552
(71) Applicant: Hitachi High-Tech Corporation, Minato-ku Tokyo 105-6409 (JP)
(72) Inventor: SEKINE, Yutaka, Tokyo 105-6409 (JP); SUGIMURA, Yoshiaki, Tokyo 105-6409 (JP)
(74) Representative: MERH-IP Matias Erny Reichl Hoffmann Patentanwälte PartG mbB
(86) International application number: PCT/JP2024/030343
(87) International publication number: WO 2025/115320

(57) **Abstract**

To provide a technique capable of attaching and detaching a second member having a measurement container to and from a first member retaining a photodetector such that a photodetector and a measurement container are appropriately positioned relative to each other. An optical emission spectrometry detection device 200 that includes a photodetector 210 that detects light emitted from a sample to be measured, includes: a first member 220 that has a cylindrical shape and has an insertion hole 221 that penetrates in a vertical direction and in which the photodetector 210 is inserted; a base substrate 230 disposed on a lower side of the first member 220 in the vertical direction; a second member 250 that has a supply chamber to which the sample is supplied, and that is disposed on a lower side of the base substrate 230 in the vertical direction; and a third member 260 that is in contact with a top surface of the first member 220 around the insertion hole 221 and has a plurality of claw portions 263 that slide relative to the second member 250. When the third member 260 is rotated in a state where the third member 260 is in contact with the top surface of the first member 220, the plurality of claw portions 263 are engaged with the second member 250, and the first member 220 and the second member 250 are fixed via the third member 260.

## Description

### Technical Field

The present disclosure relates to an optical emission spectrometry detection device and an automatic analyzer.

### Background Art

For an optical emission spectrometry detection device and an automatic analyzer, a technique is disclosed, which quantitatively analyzes a minute amount of a target substance, which is to be measured, by binding a luminescent substrate to the target substance, introduces a reaction solution containing this substance into a flow cell serving as a measurement container, and uses a photodetector (for example, a photomultiplier tube) to detect light emitted when this substance is excited (see Patent Literature 1).

### Citation List

### Patent Literature

Patent Literature 1: Japanese Unexamined Patent Application Publication No. 2014-149305

### Summary of Invention

### Technical Problem

In such an automatic analyzer described above, to prevent misalignment between a measurement container and a photodetector, for example, a first member (photodetector retainer member) that retains the photodetector and a second member (measurement container retainer member) that retains the measurement container may be fixed with a screw or the like. In a case where the first member and the second member are fixed with the screw or the like, it is possible to suppress misalignment between the photodetector and the measurement container. Therefore, light shielding performance in a region surrounded by a flow passage in the measurement container and the photodetector is improved, and a reduction in an S/N ratio at the time of signal measurement by the photodetector is suppressed.

However, for example, to fix the first member and the second member with the screw, a worker needs to tighten or loosen the screw using a tool each time the measurement container is brought in or taken out, and thus the workability is not high. In addition, during the fixing with the screw or the like, there is a risk that inappropriate tightening may occur due to a human error by the tightening worker. If the measurement container tilts relative to the photodetector or shifts relative to the photodetector and is fixed, it may cause insufficient light reception on the photodetector or an entry of stray light into the photodetector, normal analytical results may not be obtained.

An object of the present disclosure is to provide a technique capable of attaching and detaching the second member having a measurement container to and from a first member retaining the photodetector such that the photodetector and the measurement container are appropriately positioned relative to each other.

### Solution to Problem

To solve the above-described problems, there is provided an optical emission spectrometry detection device that includes a photodetector that detects light emitted from a sample to be measured, and the optical emission spectrometry detection device includes: a first member that has a cylindrical shape and has an insertion hole that penetrates in a vertical direction and in which the photodetector is inserted; a base substrate disposed on a lower side of the first member in the vertical direction; a second member that has a supply chamber to which the sample is supplied, and that is disposed on a lower side of the base substrate in the vertical direction; and a third member that is in contact with a top surface of the first member around the insertion hole and has a plurality of claw portions that slide relative to the second member. When the third member is rotated in a state where the third member is in contact with the top surface of the first member, the plurality of claw portions are engaged with the second member, and the first member and the second member are fixed via the third member. Advantageous Effects of Invention

The present disclosure is able to provide a technique capable of attaching and detaching a second member having a measurement container to and from a first member retaining a photodetector such that the photodetector and the measurement container are appropriately positioned relative to each other. Brief Description of Drawings

Fig. 1 is a plan view schematically illustrating an example of an automatic analyzer.
Fig. 2 is a front view illustrating an example of an optical emission spectrometry detection device according to the first embodiment.
Fig. 3 is a cross-sectional diagram illustrating an example of the optical emission spectrometry detection device according to the first embodiment.
Fig. 4 is a cross-sectional diagram illustrating an example of the optical emission spectrometry detection device according to the first embodiment.
Fig. 5 is a diagram explaining a fixing principle in the optical emission spectrometry detection device according to the first embodiment.
Fig. 6 is a front view illustrating a modification of the optical emission spectrometry detection device according to the first embodiment.
Fig. 7 is a diagram explaining a fixing operation of the optical emission spectrometry detection device according to the first embodiment.
Fig. 8 is a front view illustrating an example of an optical emission spectrometry detection device according to the second embodiment.
Fig. 9 is a cross-sectional diagram illustrating an example of the optical emission spectrometry detection device according to the second embodiment.
Fig. 10 is a cross-sectional diagram illustrating an example of the optical emission spectrometry detection device according to the third embodiment.
Fig. 11 is a diagram explaining a fixing principle in the optical emission spectrometry detection device according to the third embodiment.
Fig. 12 is a cross-sectional diagram explaining a fixing operation of the optical emission spectrometry detection device according to the third embodiment.

### Description of Embodiments

In the following embodiments, for convenience, the description may be divided into multiple sections or embodiments when necessary. However, unless explicitly stated otherwise, these are not unrelated to each other, and one relates to another as a modification, details, a supplementary explanation, or the like of a part or all of the other.

In addition, in the following embodiments, when referring to the number of elements (including quantities, numerical values, amounts, ranges, and the like), except when expressly stated otherwise or when the number is clearly limited to a specific number in principle, it is not limited to the specific number and may be either greater than or equal to or less than or equal to the specific number.

In addition, in the following embodiments, it goes without saying that the constituent elements (including element steps and the like) are not necessarily essential unless otherwise specified or unless they are clearly considered essential in principle.

Similarly, in the following embodiments, when referring to the shapes, positional relationships, and the like of the constituent elements and the like, they are intended to include shapes and the like that are substantially approximate or similar to those shapes and the like unless otherwise specified or unless they are clearly considered to be those in principle. The same applies to the above-described numerical values and ranges.

In addition, in all the drawings for explaining the embodiments, the same members are generally denoted by the same reference signs, and repeated explanations thereof will be omitted. In order to make the drawings easier to understand, hatching may be used even in a plan view.

### <Optical Emission Spectrometry>

Before description of an optical emission spectrometry detection device and an automatic analyzer according to each embodiment, the optical emission spectrometry technology will be briefly described.

Optical emission spectrometry is a technique used to analyze trace components, and is generally more sensitive than absorption measurement and is widely used in fields such as environmental analysis, pharmaceutical analysis, food analysis, clinical testing, and nucleic acid analysis. The optical emission refers to the emission of light when an excited-state substance transitions to its ground state.

The optical emission is classified based on the cause of electron excitation. For example, the optical emission is classified into thermoluminescence when electrons are excited by heat, photoluminescence when electrons are excited by light irradiation, and electroluminescence when electrons are excited by voltage. The optical emission spectrometry detection device according to the present embodiment includes a measurement container applicable to optical emission spectrometry for these various optical emission aspects. In each of the embodiments described below, an example is given in which the technology disclosed herein is applied to chemiluminescence analysis.

Chemiluminescence is also a form of luminescence and is a phenomenon where light is emitted when a substance generated by a chemical reaction transitions from an excited state to a ground state. Bioluminescence in an organism such as a firefly, which catalyzes a chemical reaction through enzyme, is a type of chemiluminescence.

In chemiluminescence analysis, for example, a solution containing at least one type of chemiluminescent reagent supplied via corresponding liquid delivery means, that is, a sample, is first introduced into a measurement container to initiate a chemical reaction. After that, a photodetector using a photoelectric conversion element such as a photomultiplier tube or a photodiode detects light emitted from the solution within the measurement container via chemiluminescence. Then, a photoelectric conversion element converts the light into an electric current intensity corresponding to the amount of the incident light, and measures the intensity of the light based on the electric current intensity.

The emission wavelength of chemiluminescence is generally within the visible light range (350 nm to 800 nm). Therefore, in each embodiment, the wavelength of a light signal is described as visible light. However, even for emission wavelengths that are out of the visible light range, similar effects can be obtained by selecting a member suitable for the wavelength characteristics.

### (First Embodiment)

### <Automatic Analyzer>

An automatic analyzer is a device that analyzes a bio-derived liquid sample such as blood or urine. In order to analyze a bio-derived liquid sample with high sensitivity, it is essential to use a technique capable of selectively recognizing a target component in a sample containing a large amount of coexisting components.

For example, in an immunoassay in which a sample to be analyzed is an antigen or an antibody in a cancer marker, an infectious virus, a hormone, or the like, serum contains many protein components (for example, about 70 g/L), whereas a component to be analyzed is present in an extremely small amount ranging from f (femto) mol/L to n (nano) mol/L.

In biological sample analysis requiring such high sensitivity, a technique is employed, which selectively labels and separates a target analyte by using a substance that selectively binds to the target analyte.

For example, in the sandwich method commonly used in immunoassay, analysis is performed through steps shown in (1) to (3) below.
(1) A first antibody bound to a magnetic particle and a second antibody bound to a luminescent label are mixed and bound to an antigen to be analyzed through an antigen-antibody reaction.
(2) The magnetic particle is magnetically captured using a permanent magnet, and a coexisting component that is not bound to the magnetic particle is discharged from a reaction container.
(3) The luminescent label bound to the magnetic particle is made to emit light, and the luminescence intensity, which depends on the concentration of the target antigen, is measured.

### <Overall Configuration of Automatic Analyzer>

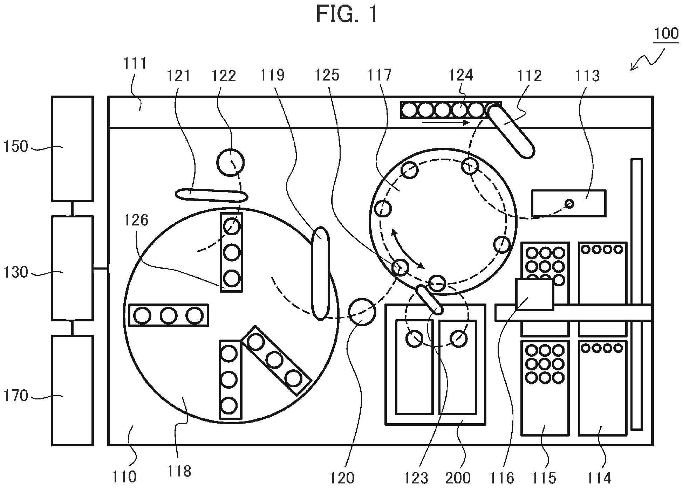

Fig. 1 is a plan view schematically illustrating an example of an overall configuration of the automatic analyzer. First, the overall configuration of the automatic analyzer including the optical emission spectrometry detection device will be described with reference to Fig. 1.

As illustrated in Fig. 1, the automatic analyzer 100 includes an analysis unit 110, a control unit 130, an input unit 150, and a display device 170. The analysis unit 110 performs an analysis operation. The control unit 130 controls the entire device. The input unit 150 receives information entered by a user. The display device 170 displays various types of information. The input unit 150 may also serve as the display device 170, and an example thereof is a touchscreen monitor.

The analysis unit 110 includes a conveyance mechanism 111, a sample probe 112, a tip attachment/detachment unit 113, a tip magazine 114, a reaction container magazine 115, a tip/reaction container transfer mechanism 116, an incubator (reaction disk) 117, a reagent disk 118, a reagent dispensing probe 119, a reagent probe cleaning unit 120, a magnetic particle stirring mechanism 121, a magnetic particle stirring mechanism cleaning unit 122, a detection device dedicated dispensing probe 123, and an optical emission spectrometry detection device (hereinafter also simply referred to a detection device) 200.

The conveyance mechanism 111 is a device that conveys a sample container 124 containing a sample to a sample dispensing position. The sample probe 112 is a device that dispenses the sample. The tip attachment/detachment unit 113 is a device that attaches and detaches a disposable tip (hereinafter referred to as a tip) to and from the sample probe 112.

The tip magazine 114 is a device that supplies the tip. The reaction container magazine 115 is a device that supplies a reaction container. The tip/reaction container transfer mechanism 116 is a device that conveys the tip and the reaction container.

The incubator 117 is a device that includes a plurality of opening portions 125 capable of maintaining a reaction solution within the reaction container at a constant temperature. The reagent disk 118 is a device that holds a reagent container 126 containing an analytical reagent.

The reagent dispensing probe 119 is a device that dispenses the analytical reagent into the incubator 117. The reagent probe cleaning unit 120 is a device that cleans the reagent dispensing probe 119 with water and a cleaning liquid.

The magnetic particle stirring mechanism 121 is a device that stirs the analytical reagent containing a magnetic particle before the dispensing. The magnetic particle stirring mechanism cleaning unit 122 is a device that cleans the magnetic particle stirring mechanism 121 with water and a cleaning liquid.

The detection device 200 is a device that detects emitted light. The detection device dispensing probe 123 is a device that dispenses the reaction solution into the detection device 200. A plurality of bottles that include a spare bottle and are provided for supplying each of common reagents such as a luminescent reagent, a cleaning liquid, and a probe cleaning liquid are stored in the automatic analyzer 100, and are supplied to a mechanism corresponding to the reagent through a reagent tube in which the bottles are inserted.

### <Outline of Analysis Step by Automatic Analyzer>

Next, an outline of an analysis step by the automatic analyzer 100 will be briefly described.

When the analysis step is started by the automatic analyzer 100, first, the reaction container supplied from the reaction container magazine 115 is set on the incubator 117. Meanwhile, a measurement reagent containing a magnetic particle is stirred by the magnetic particle stirring mechanism 121, and the magnetic particle is suspended in the reagent container 126.

Subsequently, the measurement reagent (reaction reagent) containing the magnetic particle and a measurement reagent (reaction reagent) containing a first antibody are dispensed into the reagent container by the reagent dispensing probe 119 and mixed, and incubation is performed for a certain period of time.

Thereafter, the reaction container 124 containing the sample is conveyed to a sample collection position by the conveyance mechanism 111, and the tip is attached to the sample probe 112 by the tip attachment/detachment unit 113, and the sample is dispensed into the reaction container on the incubator 117 by the sample probe 112. Subsequently, a measurement reagent containing a second antibody is dispensed into the reagent container by the reagent dispensing probe 119, and incubation is performed for a certain period of time.

The liquid in the reaction container is dispensed into a measurement container disposed in the detection device 200 by the detection device dispensing probe 123, and the detection device 200 performs optical emission spectrometry. A measurement result obtained by the optical emission spectrometry is displayed on the display device 170. The measurement container disposed in the detection device 200 is periodically replaced due to a reason such as degradation.

### <Detection Device>

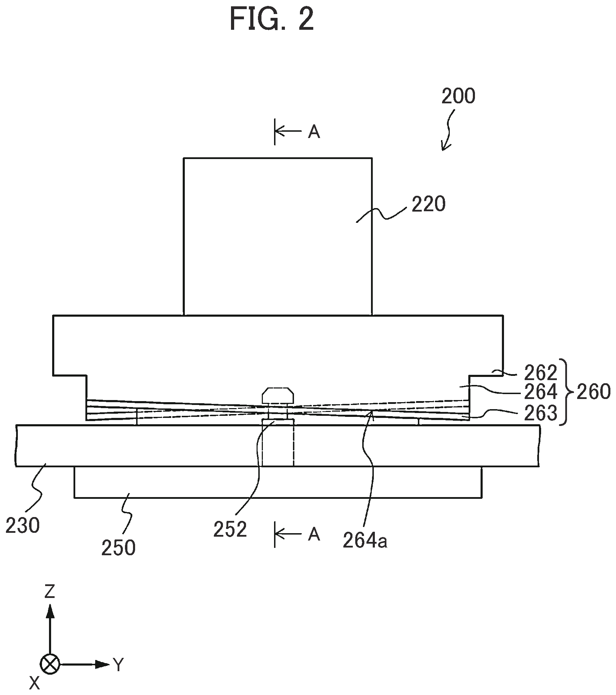

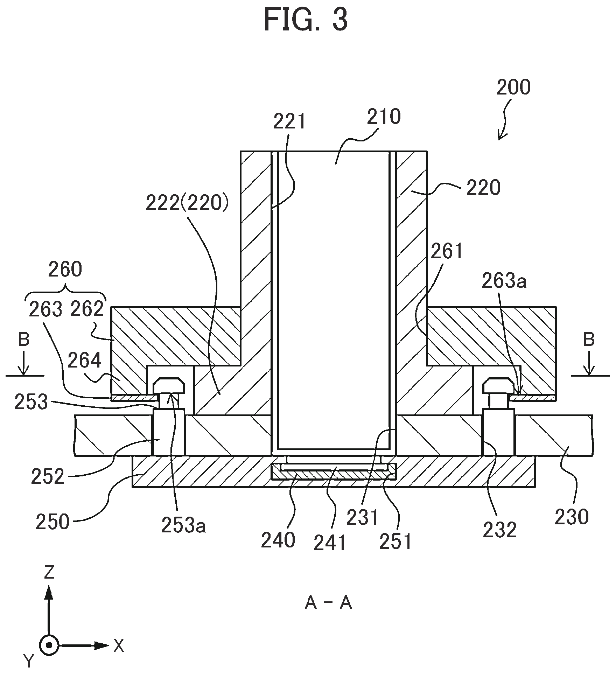

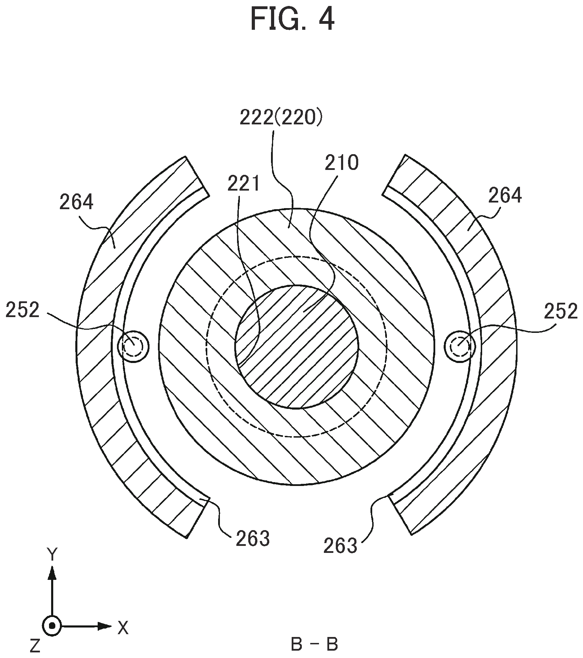

Next, the detection device 200 that is the optical emission spectrometry detection device will be described. Fig. 2 is a front view illustrating an example of the optical emission spectrometry detection device according to a first embodiment. Fig. 3 and Fig. 4 are cross-sectional views of the optical emission spectrometry detection device according to the first embodiment. Fig. 3 is a cross-sectional view taken along line A-A illustrated in Fig. 2. Fig. 4 is a cross-sectional view taken along line B-B illustrated in Fig. 3.

The detection device (optical emission spectrometry detection device) 200 is used in, for example, a field such as clinical testing, nucleic acid analysis, pharmaceutical analysis, food analysis, or environmental analysis.

As illustrated in Figs. 2 to 4, the detection device 200 according to the first embodiment includes a photodetector 210, a photodetector retainer member 220 serving as a first member, a base substrate 230, a measurement container 240 and a measurement container retainer member 250 that serve as a second member, and a fixing member 260 serving as a third member.

The photodetector retainer member 220 is disposed on the upper side of the base substrate 230 in a vertical direction (Z direction in the drawings). The measurement container 240 and the measurement container retainer member 250 are disposed on the lower side of the base substrate 230 in the vertical direction. Although described later, the photodetector retainer member 220, the measurement container 240, and the measurement container retainer member 250 are fixed by the fixing member 260 in a state where the photodetector retainer member 220, the measurement container 240, and the measurement container retainer member 250 are positioned relative to the base substrate 230.

The photodetector 210 is a sensor that detects light emitted from the sample supplied into the measurement container 240. Examples of the photodetector 210 are a photomultiplier tube and a photodiode. In this example, a photomultiplier tube is used as the photodetector 210. Although not illustrated, an electric signal detection device processing circuit for extracting an electric signal from the photodetector 210, or the like is connected to the photodetector 210.

The photodetector retainer member 220 is a member for retaining the photodetector 210 and has an insertion hole 221 that is a space in which the photodetector 210 is inserted. That is, the photodetector retainer member 220 is a cylindrical member in which the insertion hole 221 is formed. The insertion hole 221 is a space having a substantially circular opening and penetrates through the photodetector retainer member 220 in a longitudinal direction of the photodetector retainer member 220. The photodetector retainer member 220 is disposed such that a longitudinal direction thereof is in the vertical direction (Z direction in the drawings).

The photodetector retainer member 220 has, at a lower end portion (lower end portion in the Z direction in Fig. 2) of the photodetector retainer member 220, a large-diameter portion 222 that has a diameter larger than the other portions of the photodetector retainer member 220. The photodetector retainer member 220 is positioned relative to and fixed to the base substrate 230 in a state where the large-diameter portion 222 is in contact with the base substrate 230.

The base substrate 230 is a substrate on which the photodetector retainer member 220 and the measurement container retainer member 250 are positioned and fixed, and is disposed between the photodetector retainer member 220 and the measurement container retainer member 250.

The base substrate 230 has a communication hole 231 formed therein, which has an opening diameter substantially identical to that of the insertion hole 221 of the photodetector retainer member 220 and communicates with the insertion hole 221. The photodetector retainer member 220 and the base substrate 230 are positioned and fixed such that the communication hole 231 overlaps with the insertion hole 221 in the Z direction. The photodetector 210 is retained by the photodetector retainer member 220 in a state where the photodetector 210 is inserted in the insertion hole 221 and the communication hole 231. It can be said that the insertion hole 221 and the communication hole 231 retain the photodetector 210.

As described above, the photodetector 210 is inserted into the insertion hole 221 and the communication hole 231, the periphery of the photodetector 210 is covered with the photodetector retainer member 220 and the base substrate 230, and thus it is possible to prevent external light unnecessary for measurement from being incident on the photodetector 210 and becoming noise light. Further, it is desirable that the photodetector retainer member 220 be finished with a matte coating or a black coating, or both. Therefore, it is possible to attenuate unnecessary light (stray light) incident on the photodetector 210 from the outside more efficiently. In addition, it is preferable that the base substrate 230 be also processed in the same manner.

The photodetector retainer member 220 can be used to mechanically connect the optical emission spectrometry detection device 200 to an external automatic analyzer (not illustrated). In addition, in the present embodiment, the photodetector retainer member 220 and the base substrate 230 are different members, but the photodetector retainer member 220 and the base substrate 230 may be integrally formed. That is, the base substrate 230 may constitute a portion of the photodetector retainer member 220 that is the first member.

The measurement container 240 is, for example, a disc-shaped member, and has, formed therein, a supply chamber 241 into which the sample to be measured is supplied. The supply chamber 241 is a portion where the supplied sample is made to emit light. The measurement container 240 is disposed on the lower side of the base substrate 230 in the vertical direction in a state where the measurement container 240 is retained by the measurement container retainer member 250. The measurement container 240 according to the present embodiment is formed with a diameter of approximately 30 mm, and the sample is placed into the supply chamber 241 for optical emission spectrometry.

The measurement container retainer member 250 is a member retaining the measurement container 240 and has a storage section 251 that is a space in which the measurement container 240 is stored. The measurement container retainer member 250 is positioned relative to and fixed to the base substrate 230 in a state where the measurement container 240 is stored in the storage section 251.

In addition, the measurement container 240 is disposed in a region facing the communication hole 231 of the base substrate 230 in the vertical direction (Z direction in the drawing). In other words, the measurement container 240 is disposed facing the photodetector 210 retained by the photodetector retainer member 220 in the Z direction.

The configurations of the measurement container 240 and the measurement container retainer member 250 are not particularly limited. For example, the measurement container retainer member 250 may also serve as the measurement container 240. As an example, a flow passage functioning as the supply chamber 241 may be formed in the measurement container retainer member 250, and the sample may be continuously supplied into the flow passage.

Examples of a member formed by the measurement container 240 and the measurement container retainer member 250 are flow cells (flow-through cells) used in clinical immunoassay and nucleic acid microarrays (DNA chips) used in nucleic acid analysis.

In addition, the measurement container retainer member 250 can be used to mechanically connect the optical emission spectrometry detection device to an external automatic analyzer (not illustrated). A role of the measurement container retainer member 250 is, for example, to facilitate temperature control by thermally connecting the measurement container 240 to an external temperature control device (not illustrated) in order to perform highly accurate analysis. In this case, the measurement container retainer member 250 is preferably made of a material with high thermal conductivity, such as aluminum or copper.

In addition, in order to control the temperature of the measurement container 240 while efficiently detecting emitted light, as illustrated in Fig. 3, it is desirable that a "side surface" and "at least a portion of an outer periphery of a top surface" of the measurement container 240 be covered with the measurement container retainer member 250. The outer periphery of the top surface of the measurement container 240 refers to the outer periphery of the top surface, that is, the surface facing the photodetector 210. In addition, another purpose of covering a portion of the measurement container 240 with the measurement container retainer member 250 is to protect the measurement container 240, for example. Further, another purpose is to prevent external light unnecessary for measurement from being incident on the photodetector 210 through the measurement container 240 and becoming noise light.

Since the measurement container retainer member 250 attenuates unnecessary emitted light from the outside, it is desirable that the measurement container retainer member 250 be finished with a matte coating and a black coating. In the present embodiment, the measurement container retainer member 250 is made of an aluminum material and finished with a matte coating and a black coating.

The fixing member 260 is a member for the measurement container retainer member 250 in a state where the measurement container retainer member 250 is positioned relative to the base substrate 230. Further, in the present embodiment, the fixing member 260 fixes the photodetector retainer member 220 in a state where the photodetector retainer member 220 is positioned relative to the base substrate 230. In other words, the fixing member 260 is a member for fixing the photodetector retainer member 220, the base substrate 230, and the measurement container retainer member 250 in a state where the photodetector retainer member 220, the base substrate 230, and the measurement container retainer member 250 are positioned.

### <Fixing Structure>

A fixing structure the photodetector retainer member 220, the base substrate 230, and the measurement container retainer member 250 by the fixing member 260 will be described below.

The measurement container retainer member 250 has cylindrical protrusions 252 as protrusions protruding toward the photodetector retainer member 220 from a top surface of the measurement container retainer member 250. In the present embodiment, the cylindrical protrusions 252 protrude upward in the vertical direction. The cylindrical protrusions 252 are present at two locations that are point-symmetrical with respect to the center (the center of the storage section 251) of the measurement container 240. The two cylindrical protrusions 252 are disposed at a 180-degree interval around the storage section 251 of the measurement container retainer member 250. The cylindrical protrusions 252 are fitted into respective fitting holes 232 disposed in the base substrate 230. That is, the base substrate 230 has the plurality of (two in the present embodiment) the fitting holes 232 corresponding to the respective cylindrical protrusions 252.

Each of the cylindrical protrusions 252 has a length (height) extending to the top surface side of the base substrate 230, that is, to the photodetector retainer member 220 side. A groove portion 253 is disposed on at least a portion of an outer periphery of each of the cylindrical protrusions 252 on the top surface side of the base substrate 230. The groove portions 253 extend in circumferential directions of the respective cylindrical protrusions 252. In the present embodiment, the groove portions 253 are formed around the entire circumferences of the cylindrical protrusions 252. The claw portions 263 of the fixing member 260 (described later) are fitted into the groove portions 253, whereby the measurement container retainer member 250 is positioned relative to and fixed to the base substrate 230. Further, the photodetector retainer member 220 is positioned relative to and fixed to the base substrate 230.

A fitting structure for positioning the photodetector retainer member 220 and the base substrate 230 may be disposed. For example, on either the photodetector retainer member 220 or the base substrate 230, a convex portion protruding toward the other of the photodetector retainer member 220 or the base substrate 230 may be disposed. A concave portion fitted in the convex portion may be disposed on the other of the photodetector retainer member 220 or the base substrate 230. Further, the photodetector retainer member 220 may be positioned relative to and fixed to the base substrate 230 via means other than the fixing member 260.

In this case, the cylindrical protrusions 252 of the measurement container retainer member 250 and the fitting holes 232 of the base substrate 230 are formed with any fitting tolerance that matches the positioning accuracy required for the measurement container retainer member 250. That is, since the cylindrical protrusions 252 are fitted in the fitting holes 232, the measurement container retainer member 250 is positioned relative to the base substrate 230.

Therefore, the measurement container retainer member 250 retaining the measurement container 240 can be disposed at a reproducible position relative to the base substrate 230. For example, to replace the measurement container 240, the measurement container retainer member 220 retaining the measurement container 240 can be positioned relative to the base substrate 230 with high accuracy.

In the present embodiment, the cylindrical protrusions 252 are configured as separate members that are separable from the measurement container retainer member 250. Each of the cylindrical protrusions 252 and the measurement container retainer member 250 are fixed to each other, for example, by a female screw disposed on the measurement container retainer member 250 and a male screw disposed on one end of the cylindrical protrusion 252.

The material of the cylindrical protrusions 252 may be selected in any manner as long as the material is not a material with a significantly low elastic modulus, such as rubber. In the present embodiment, as the material of the cylindrical protrusions 252, stainless steel is used, but resins such as polyphenylene sulfide (PPS), polyether ether ketone (PEEK), or polyamide (PA) may also be used.

The cylindrical protrusions 252 may protrude from the top surface of the measurement container retainer member 250 to the top surface side of the base substrate 230, and the configuration thereof is not particularly limited. The cylindrical protrusions 252 may be fastened to the measurement container retainer member 250, for example, by press fitting or shrink fitting, and may also be integrally formed with the measurement container retainer member 250 by means such as a cutting method or a molding method.

In addition, the cylindrical protrusions 252 may be machined to have tips having conical or spherical surfaces to facilitate insertion into the fitting holes 232 of the base substrate 230. Further, a sliding coating such as a fluorine-based resin may be applied to an outer circumferential surface of each cylindrical protrusion 252.

In a case where the cylindrical protrusions 252 are separable from the measurement container retainer member 250, it is preferable that a portion of the outer periphery of each of the cylindrical protrusions 252 be machined to have a shape such as a D-cut, a slot, or a cross groove. This makes it easier to attach the cylindrical protrusions 252 to the measurement container retainer member 250.

The fixing member 260 has a substantially circular planar shape, and has a through-hole 261 that is formed in a central portion thereof and through which the photodetector retainer member 220 is inserted. This through-hole 261 is formed with an inner diameter smaller than the outer diameter of the large-diameter portion 222 of the photodetector retainer member 220. Therefore, in a state where the photodetector retainer member 220 is inserted in the through-hole 261, an under surface of the fixing member 260 is in contact with a top surface of the large-diameter portion 222. The fixing member 260 is formed so as to be rotatable in this state. As an example, the fixing member 260 has a ring portion 262 disposed so as to be rotatable around the outer periphery of the photodetector retainer member 220.

In addition, the fixing member 260 has, at an outer periphery of the ring portion 262, the claw portions 263 protruding in the horizontal direction. The claw portions 263 are formed to have a thickness less than that of the ring portion 262. This claw portions 263 are disposed corresponding to the respective cylindrical protrusions 252 so that the claw portions 263 are fitted into the groove portions 253 of the cylindrical protrusions 252 when the fixing member 260 (ring portion 262) is rotated. That is, the claw portions 263 are present at two locations that are point-symmetrical with respect to the center of the measurement container 240 as in the cylindrical protrusions 252.

More specifically, wall portions 264 protruding from the bottom surface of the ring portion 262 toward the base substrate 230 side are disposed on a portion of the outer periphery of the ring portion 262. The fixing member 260 according to the present embodiment is present at two locations that are point-symmetrical with respect to the center of the measurement container 240. The two wall portions 264 are continuously disposed over a 90-degree range along the outer periphery of the ring portion 262. In other words, the two wall portions 264 are disposed at a 90-degree interval around the outer periphery of the ring portion 262.

The claw portions 263 are disposed on lower end surfaces 264a of the wall portions 264. The two claw portions 263 are continuously disposed over a 90-degree range along the outer periphery of the ring portion 262.

The lower end surface 264a of each of the wall portions 264 forms a helical surface with the center of the through-hole 261 as its axis. In other words, the claw portions 263 are disposed on the helical surfaces formed on the wall portions 264 protruding from the ring portion 262, with the center of the through-hole 261 as their axis. As a result, the claw portions 263 are disposed such that the top portions 263a are helical surfaces. The helical surfaces are surfaces that continuously change in height while bending in an arclike manner. In the following description, the top surfaces 263a of the claw portions 263 may be referred to as helical surfaces 263a.

The top surfaces 263a of the two claw portions 263 do not form a continuous helical surface. As illustrated in Fig. 2, the two claw portions 263 need to be arranged symmetrically in a right-left direction. That is, the two claw portions 263 need to be arranged such that when the fixing member 260 is rotated at 180 degrees, one of the claw portions 263 is positioned at the position of the other of the claw portions 263.

It is desirable that the top surfaces (helical surfaces) of the claw portions 263 are formed by continuously varying a line segment, which is horizontal in any vertical cross-section as illustrated in Fig. 3, along a winding line. However, in actual use, each of the helical surfaces 263a may be approximated by an arc or a spline.

Side surfaces (top surfaces) of the groove portions 253 of the cylindrical protrusions 252 that are in contact with the top surfaces (helical surfaces) 263a of the claw portions 263 are horizontal surfaces. However, in the configuration in the present embodiment, inclinations of the helical surfaces 263a are small, and thus the claw portions 263 and the cylindrical protrusions 252 deform within material elastic ranges, and come into contact nearly parallel to each other.

The top surfaces 263a of the claw portions 263 are helical surfaces. Therefore, as the fixing member 260 is rotated, each of the claw portions 263 and each of the cylindrical protrusions 252 slide and cause a contact position between the claw portion 263 and the cylindrical protrusion 252 to move vertically upward. That is, the measurement container retainer member 250 retaining the measurement container 240 is pushed upward in the vertical direction. As a result, the measurement container retainer member 250 is pressed against the under surface of the base substrate 230. Therefore, the measurement container retainer member 250 is positioned relative to and fixed to the base substrate 230.

Meanwhile, as the fixing member 260 is rotated, the fixing member 260 is pressed against the top surface of the large-diameter portion 222 of the photodetector retainer member 220. As a result, the photodetector retainer member 220 is pressed against the top surface of the base substrate 230. Therefore, the photodetector retainer member 220 is positioned relative to and fixed to the base substrate 230. Further, the photodetector retainer member 220 and the measurement container retainer member 250, which are arranged on opposite sides of the base substrate 230, are fixed via the fixing member 260.

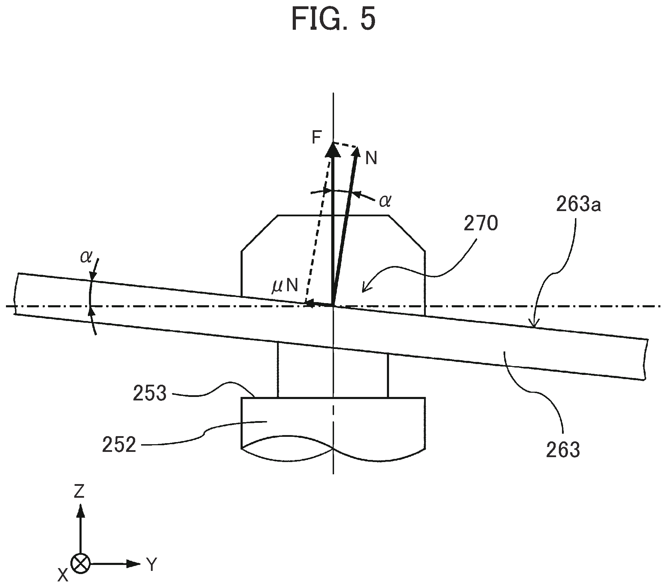

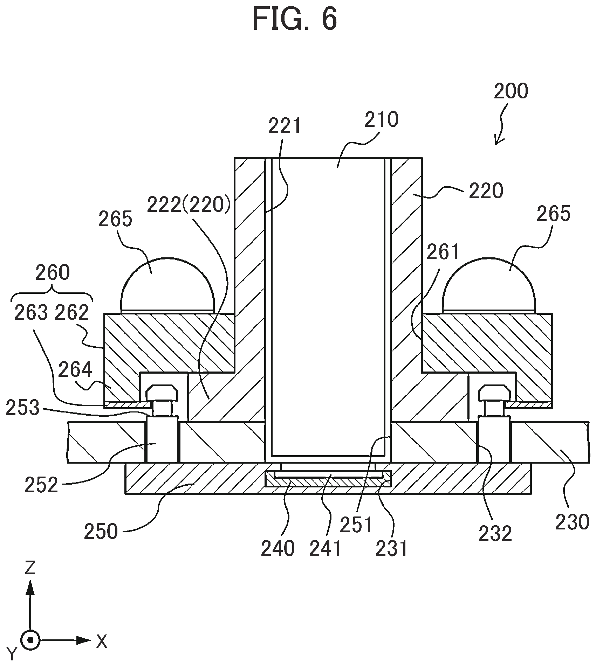

Next, a state where the photodetector retainer member 220, the base substrate 230, and the measurement container retainer member 250 are fixed will be described in detail with reference to Figs. 5 and 6. Fig. 5 is a diagram explaining a fixing principle in the detection device, and is a schematic diagram illustrating an enlarged view of a contact portion between the claw portion 263 and the cylindrical protrusion 252 in Fig. 3, with a lead angle α of each helical surfaces 263a highlighted for explanation. Fig. 6 is a schematic diagram for explaining a fixing operation of the detection device.

As illustrated in Fig. 5, due to torque when an operator rotates the fixing member 260 (ring portion 262), each of the cylindrical protrusions 252 receives a load component N perpendicular to a corresponding one of the helical surfaces 263a and a frictional force µN along the helical surface 263a. The load N is a reaction force generated primarily by the extension of the wall portions 264 (ring portion 262) on which the claw portions 263 are disposed and the cylindrical protrusions 252, as contact portions 270 between the claw portions 263 and the cylindrical protrusions 252 move upward in the vertical direction due to the rotation of the fixing member 260. That is, the relationship between the rotation angle and the load N when the fixing member 260 is rotated in a state where the claw portions 263 are in contact with the cylindrical protrusions 252 is determined based on the elastic modulus of the material of the fixing member 260 and the elastic modulus of the material of the cylindrical protrusions 252. For example, when a case where a material (such as polyacetal) with a low elastic modulus is used for the fixing member 260 (ring portion 262) is compared to a case where a material (such as stainless steel) with a high elastic modulus is used for the fixing member 260 (ring portion 262), the load N on the fixing member 260 at the same rotation angle is smaller when the material with the low elastic modulus is used.

The resultant force Ncosα + µNsinα of these vertical components acts as the vertical load F on each cylindrical protrusion 252, and serves as a fastening force for the measurement container retainer member 250. Therefore, when the load N is the same, the smaller the lead angle α of the helix surface 263a, the greater the vertical load F becomes. As a result, the fastening force between the cylindrical protrusions 252 and the claw portions 263 increases, which increases the light shielding performance of the photodetector 210 when the measurement container retainer member 250 is fixed to the base substrate 230.

However, reducing the lead (the distance traveled per revolution of the helix) of the helical surface 263a increases the amount of rotation required for the fixing member 260 to fix the measurement container retainer member 250 to the base substrate 230. Therefore, making the lead of spiral surface 263a too short makes the work cumbersome, which is contrary to the purpose of the technology disposed herein.

Meanwhile, in a case where the outer diameter of each helical surface 263a is short, it is necessary to increase the lead angle α in order to avoid excessively increasing the amount of rotation required for the fixing member 260 to fix the measurement container retainer member 250 to the base substrate 230. Therefore, the top surfaces (helical surfaces) 263a of the claw portions 263 and inner surfaces (top surfaces) of the groove portions 253 deviate from a nearly parallel state. The claw portions 263 may not slide relative to the inner surfaces of the groove portions 253 of the cylindrical protrusions 252.

In consideration of these points, it is desirable to determine the lead of each of the helical surfaces 263a. For example, it is desirable to determine the lead of each of the helical surfaces 263a such that the amount of rotation of the fixing member 260 (ring portion 262) required for fixing the measurement container retainer member 250 to the base substrate 230 is within a range that does not become impractically cumbersome. As an example, it is preferable that the outer diameter of each of the helical surfaces 263a be 65 mm, the lead be approximately 4 mm, a range of rotation of the fixing member 260 required for fixing the measurement container retainer member 250 to the base substrate 230 be less than 90 degrees. In this case, the lead angle α is 1.1 degrees, and the difference in height between both ends of each helical surface 263a in a longitudinal direction of the helical surface 263a is approximately 1 mm.

In the present embodiment, fixed states of the photodetector retainer member 220, the base substrate 230, and the measurement container retainer member 250 by the rotation of the fixing member 260 are maintained by frictional forces at the contact portions 270 between the cylindrical protrusions 252 and the claw portions 263, but the means for maintaining the fixed states is not limited thereto.

For example, a locking screw with a knob may be disposed on the outer periphery of the ring portion 262 to maintain the fixed states of the fixing member 260 and the photodetector retainer member 220. Alternatively, a ball plunger may be disposed on one of the ring portion 262 and the photodetector retainer member 220, and a hole into which a ball is fitted may be disposed on the other of the ring portion 262 and the photodetector retainer member 220. Therefore, the fixing member 260 is held at a specific angle, and the fixed states of the fixing member 260and the photodetector retainer member 220 are maintained. As a result, the fixed states of the measurement container retainer member 250 and the base substrate 230 are maintained.

In the present embodiment, the claw portions 263 are disposed on lower end surfaces 264a of the wall portions 264. Therefore, dimensional errors of the cylindrical protrusions 252 can be reduced by the amount of rotation of the fixing member 260. That is, even if dimensional errors are present in the cylindrical protrusions 252, the fixing member 260 enables the measurement container retainer member 250 and the like to be fixed appropriately with high reproducibility.

For example, in the example illustrated in Fig. 2, it is assumed that the cylindrical protrusions 252 are longer than a length illustrated. In this case, positions where the claw portions 263 start contacting the groove portions 253 of the cylindrical protrusions 252 move to the left in the drawing. In other words, the rotational angle (ring angle) from the start of clockwise rotation of the fixing member 260 until the claw portions 263 start contacting the groove portions 253 of the cylindrical protrusions 252 is larger than that in the example illustrated in Fig. 2.

However, since the lead angle of each helical surface 263a is constant, the fixing member 260 can be tightened with desired torque within the movable range of the ring portion 262, that is, within a range in which the claw portions 263 are disposed in a circumferential direction of the ring portion 262, regardless of the ring angle at which the claw portions 263 start contacting the groove portions 253 of the cylindrical protrusions 252.

As described above, in the detection device 200 according to the present embodiment, even if a dimensional error is present in a component, the measurement container retainer member 250 and the like can be fixed with a desired fastening force, and thus reproducibility is high. That is, in the detection device 200 according to the present embodiment, even if a dimensional error is present in a component, the measurement container retainer member 250 and the like can be positioned relative to and fixed to the base substrate 230 with high accuracy.

The fixing member 260 can be manufactured by, for example, a cutting method, a molding method, a three-dimensional modeling method, or the like. In addition, the fixing member 260 according to the present embodiment can also be manufactured by a cutting method using a multi-tasking machine.

In addition, in the present embodiment, the claw portions 263 and the ring portion 262 (wall portion 264) that constitute the fixing member 260 are separate components that are separable, and are fastened using screws, but may also be integrated. For example, the claw portions 263 and the ring portion 262 may also be integrally manufactured using a method such as a cutting, a molding method, a welding method, or a three-dimensional modeling method.

The ring portion 262 and the claw portions 263 each have advantages whether they are separate components that are separable, or are an integrated component. The claw portions 263 are members that slide relative to the cylindrical protrusions 252. Therefore, by making the claw portions 263 as separate members separable from the ring portion 262, the claw portions 263 have the advantage of being locally replaceable due to degradation such as wear that occurs during use.

Meanwhile, in a case where the ring portion 262 and the claw portions 263 are integrated, the number of components is small, which has the advantage of reducing the cost. In addition, the claw portions 263 are members that receive concentrated loads from the cylindrical protrusions 252, and thus it is necessary to conduct an assessment of the risk of damage. However, in a case where the claw portions 263 are integrated with the ring portion 262, the claw portions 263 have the advantage of significantly reducing the risk of damage to the claw portions 263.

The fixing member 260 (ring portion 262) can be rotated by a hand of an operator without a tool in light of the purpose of the technology disclosed herein. In addition, the fixing member 260 may be formed in any shape as long as the fixing member 260 has the claw portions 263 that are rotated around the outer periphery of the photodetector retainer member 220 and fitted into the groove portions 253 of the cylindrical protrusions 252 and protrude in the horizontal direction. The fixing member 260 may include, for example, a handle 265 disposed on the top surface of the ring portion 262 as illustrated in Fig. 6. In addition, for example, the fixing member 260 may be manufactured such that the shape of the ring portion 262 itself functions as a handle. This improves the operability of the fixing member 260 for the operator.

In addition, the materials of the ring portion 262 and the claw portions 263 constituting the fixing member 260 may be selected in any manner, as long as the materials are not a material with a significantly low elastic modulus, such as rubber. As an example, the ring portion 262 is made of polyamide, and the claw portions 263 are made of stainless steel. Polyamide is known among resin materials for its relatively high tensile strength, elastic modulus, and wear resistance. Further, polyamide is a suitable example as the material for the ring portion 262, which is rotated around the photodetector retaining member 220 and receives a fastening force from the cylindrical protrusions 252 since polyamide has self-lubricating properties. Stainless steel has superior mechanical strength and excellent wear resistance and is an excellent material for the claw portions 263 since stainless is resistant to deformation even when stainless steel in a thin-walled shape like the claw portions 263 receives concentrated loads from the cylindrical protrusions 252.

In the above-described configuration, to enable quantitative identification of the rotational angle of the fixing member 260 (ring portion 262) or to enable identification of whether the measurement container retainer member 250 and the like are appropriately fixed to the base substrate 230, unillustrated reference marks, graduations, or the like may be disposed on the outer periphery of the base substrate 230 or the ring portion 262 of the fixing member 260.

Since a sliding property when the fixing member 260 is rotated around the photodetector retainer member 220 is improved, a sliding coating, a sliding tape, a washer, a bearing, or the like (not illustrated) may be disposed on a contact portion between the ring portion 262 and the photodetector retainer member 220, for example, the top surface of the large-diameter portion 222, the under surface of the ring portion 262, the inner surface of the through-hole 261, and the like.

### <Fixing Operation>

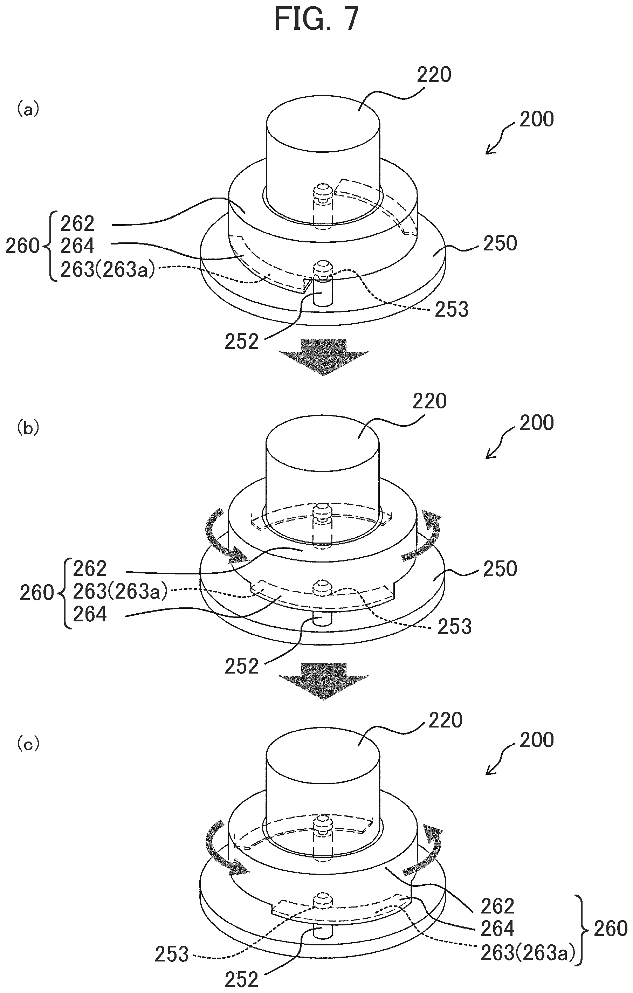

Next, an operation of fixing the measurement container retainer member 250 and the like by the fixing member 260 will be described with reference to Figs. 7(a) to 7(c). Figs. 7(a) to 7(c) are perspective views for explaining the operation of fixing the measurement container retainer member and the like by the fixing member. In Figs. 7, the base substrate 230 and components not essential to the explanation have been omitted to clearly show main parts.

More specifically, Fig. 7(a) is a diagram illustrating a state before the photodetector retainer member 220, the base substrate 230, the measurement container retainer member 250, and the fixing member 260 are assembled and the fixing member 260 is rotated. Fig. 7(b) is a diagram illustrating a state where the fixing member 260 is rotated until the cylindrical protrusions 252 start contacting the claw portions 263. Fig. 7(c) is a diagram illustrating a state where the photodetector retainer member 220, the base substrate 230, and the measurement container retainer member 250 are fixed by the fixing member 260 when the fixing member 260 is rotated with any torque after the cylindrical protrusions 252 come into contact with the claw portions 263.

First, as illustrated in Fig. 7(a), the photodetector retainer member 220, the base substrate 230, the measurement container retainer member 250, and the fixing member 260 are assembled. As described above, the cylindrical protrusions 252 of the measurement container retainer member 250 are fitted into the fitting holes 232 of the base substrate 230 (see Fig. 3). The fixing member 260 (ring portion 262) is disposed around the photodetector retainer member 220 disposed on the base substrate 230. That is, the photodetector retainer member 220 is inserted through the through-hole 261 of the fixing member 260. In this case, the cylindrical protrusions 252 are disposed between the two wall portions 264 such that the claw portions 263 do not interfere with the cylindrical protrusions 252.

Next, as illustrated in Fig. 7(b), the fixing member 260 is rotated counterclockwise. Therefore, the claw portions 263 are fitted into the groove portions 253 of the cylindrical protrusions 252. As described above, the top surfaces of the claw portions 263a are helical surfaces. Therefore, as the fixing member 260 is rotated, gaps between the side surfaces (top surfaces) of the groove portions 253 and the top surfaces (helical surfaces) 263a of the claw portions 263 gradually become small, causing the claw portions 263 to start contacting the cylindrical protrusions 252.

Thereafter, as illustrated in Fig. 7(c), when the fixing member 260 is rotated with any torque, the claw portions 263 slide within the groove portions 253 and the cylindrical protrusions 252 receive loads that push the cylindrical protrusions 252 upward in the vertical direction. Then, when the torque balances with the frictional forces at the contact portions between the claw portions 263 and the cylindrical protrusions 252, the rotation of the fixing member 260 is stopped, and the measurement container retainer member 250 and the like are fixed to the base substrate 230. That is, the claw portions 263 are engaged with the cylindrical protrusions 252, and thus the measurement container retainer member 250 and the like are fixed to the base substrate 230.

As described above, in the detection device 200 according to the present embodiment, the photodetector retainer member 220, the base substrate 230, and the measurement container retainer member 250 can be fixed at reproducible positions using a simple method that does not require a tool for attachment and removal. In other words, the photodetector retainer member 220 and the measurement container retainer member 250 can be positioned relative to and fixed to the base substrate 230 with high accuracy.

Detection devices 200 according to second and third embodiments will be described below as modifications of the configuration of the optical emission spectrometry detection device. In the second and third embodiments, the same members illustrated in the drawings as those described above are denoted by the same reference signs, and duplicate descriptions are omitted.

### (Second Embodiment)

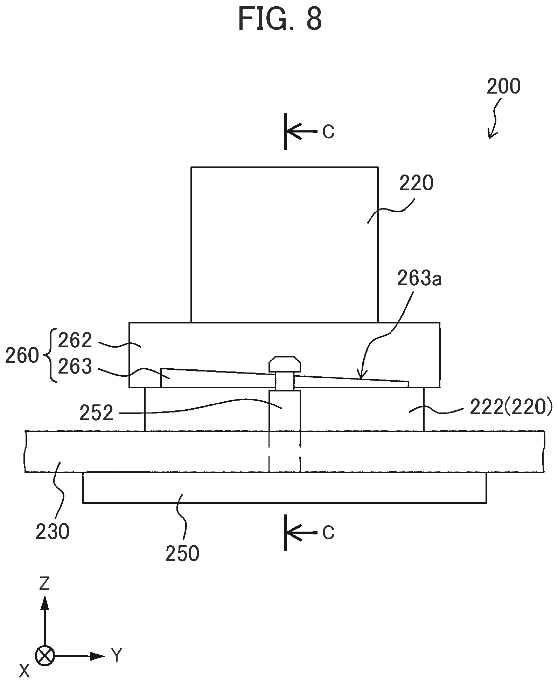

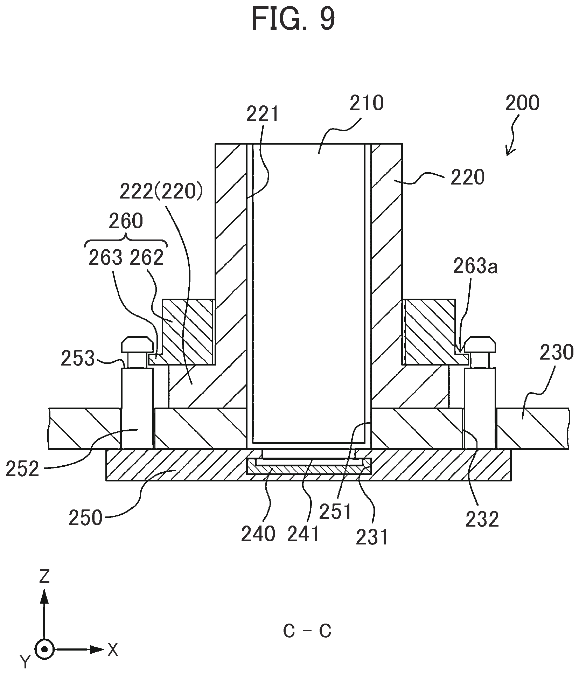

Fig. 8 is a front view illustrating a configuration of the detection device according to the second embodiment, and Fig. 9 is a cross-sectional view taken along line C-C illustrated in Fig. 8.

In the first embodiment, the configuration in which the fixing member 260 includes the claw portions 263 protruding from the outer periphery of the ring portion 262 toward the inside in a substantially horizontal direction are described as an example. However, as illustrated in Figs. 8 and 9, in the second embodiment, the fixing member 260 includes the claw portions 263 protruding outward from the outer periphery of the ring portion 262 in a substantially horizontal direction. The top surfaces 263a of the claw portions 263 are helical surfaces. In other words, the detection device 200 according to the second embodiment is different from that in the first embodiment in that the helical surfaces 263a are disposed on an outer diameter surface of the ring portion 262.

The fixing member 260 does not have a wall portion unlike the first embodiment, and the claw portions 263 are disposed protruding from a lower end portion of the outer diameter surface of the ring portion 262 toward the outer side of the ring portion 262. The top surfaces 263a of the claw portions 263 are machined into helical surfaces. As an example, the claw portions 263 are formed to have a thickness that gradually increases in the circumferential direction of the ring portion 262, resulting in the top surfaces 263a of the claw portions 263 being helical surfaces.

The claw portions 263 can also manufactured by, for example, a cutting method, a molding method, a three-dimensional molding method, or the like. The fixing member 260 according to the present embodiment can also be manufactured by a cutting method using a multi-tasking machine. The cylindrical protrusions 252 disposed on the measurement container retainer member 220 are formed to have a predetermined length according to the positions of the claw portions 263 in the Z direction. In the example illustrated in Fig. 8, the positions of the claw portions 263 are farther away from the base substrate 230 in the Z direction, compared to the example in the first embodiment. Therefore, the lengths of the cylindrical protrusions 252 are longer than those in the first embodiment, and the groove portions 253 are formed at positions corresponding to the claw portions 263.

An operation of fixing the measurement container retainer member 250 and the like in the second embodiment is similar to that in the first embodiment, and description thereof is omitted.

In the present embodiment, since a protruding direction of the claw portions 263 is in an outer diameter direction of the ring portion 262, the top surfaces 263a of the claw portions 263 can be machined into helical surfaces. For example, cutting facilitates integral formation of the claw portions 263 with the ring portion 262.

In the configuration of the detection device 200 according to the second embodiment, the photodetector retainer member 220, the base substrate 230, and the measurement container retainer member 250 can be fixed at reproducible positions using a simple method that does not require a tool for attachment and removal, as in the first embodiment. In addition, since the claw portions 263 are disposed on the outer diameter surface of the ring portion 262, the fixing member 260 can be made compact, whereby the cost can be reduced.

### (Third Embodiment)

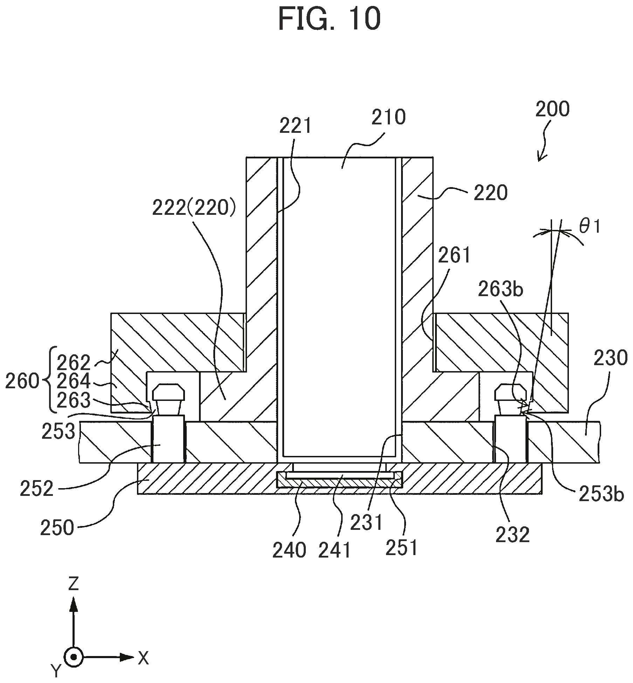

The detection device according to the third embodiment will be described with reference to Figs. 10 to 12.

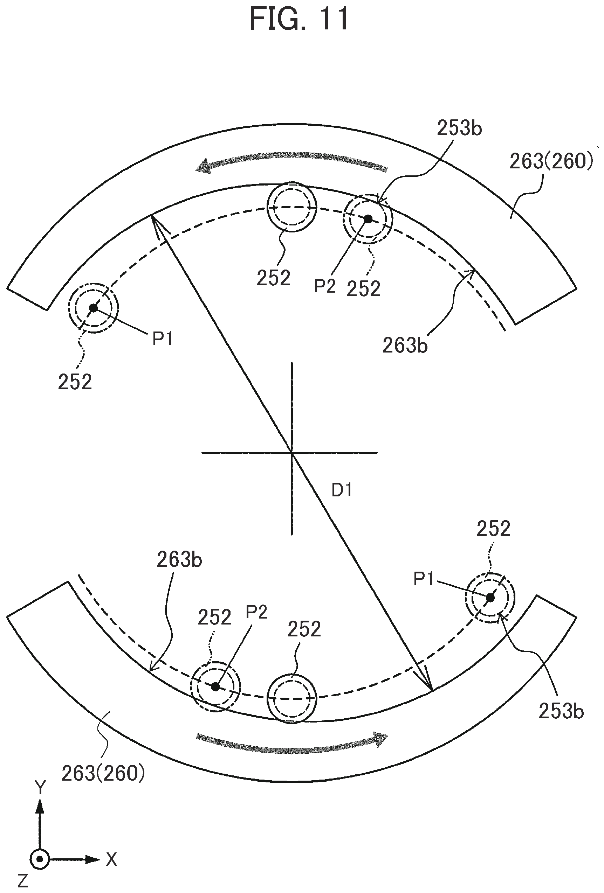

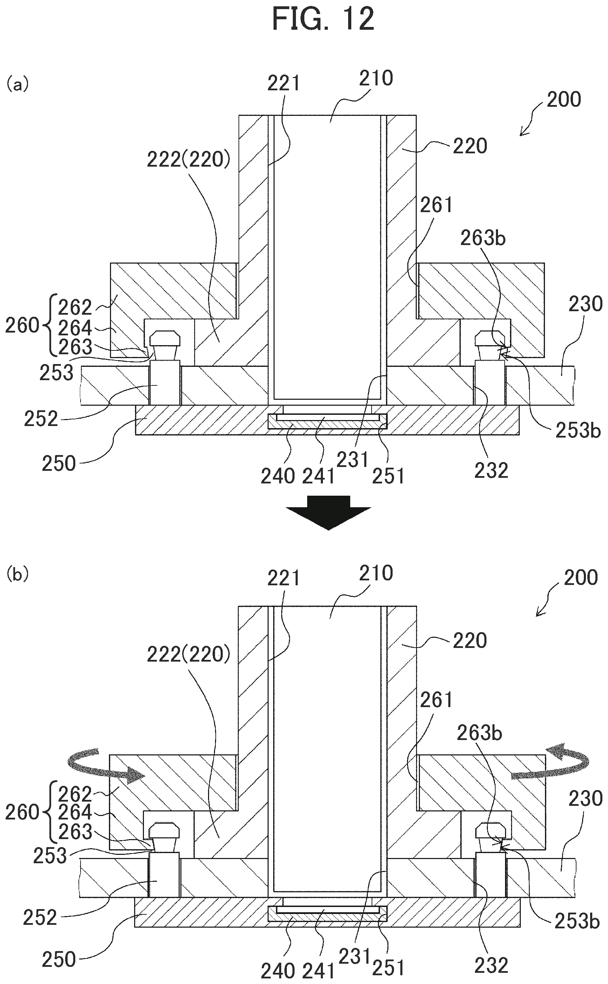

Fig. 10 is a cross-sectional view of the detection device according to the third embodiment. Fig. 11 is a diagram explaining a fixing principle in the detection device according to the third embodiment. Fig. 12 is a cross-sectional view for explaining a fixing operation of the detection device according to the third embodiment. In Figs. 10 to 12, the same reference signs as those in Fig. 3 denote the same components, and description thereof is omitted. Fig. 12(a) is a diagram illustrating a state where the cylindrical protrusions 252 of the measurement container retainer member 250 are fitted into the fitting holes 232 of the base substrate 230, and Fig. 12(b) is a diagram illustrating a state where the fixing member 260 is rotated.

As described above, in the first embodiment, the configuration is described in which the top surfaces (helical surfaces) 263a of the claw portions 263 of the fixing member 260 come into contact with the side surfaces (top surfaces) of the groove portions 253 disposed in the cylindrical protrusions 252, whereby the measurement container retainer member 250 and the like are fixed to the base substrate 230. On the other hand, in the third embodiment, an example is described in which the tip surfaces 263b of the claw portions 263 of the fixing member 260 come into contact with the bottom surfaces 253b of the groove portions 253 disposed in the cylindrical protrusions 252, whereby the measurement container retainer member 250 and the like are fixed to the base substrate 230.

In other words, in the first embodiment, when the fixing member 260 is rotated, the top surfaces 263a of the claw portions 263 that are helical surfaces come into contact with the top surfaces 253a of the groove portions 253 of the cylindrical protrusions 252 that are flat surfaces. On the other hand, in the third embodiment, when the fixing member 260 is rotated, the tip surfaces 263b of the claw portions 263 that are helical and conical composite surfaces come into contact with the bottom surfaces 253b of the groove portions 253 of the cylindrical protrusions 252 that are conical surfaces.

In the first embodiment, the claw portions 263 are formed as separate members from the ring portion 262. However, in the present embodiment, the claw portions 263 are formed integrally with the ring portion 262. Of course, the claw portions 263 according to the present embodiment may also be formed as separate members from the ring portion 262.

In this case, as illustrated in Fig. 10, in any vertical cross-section, each of the tip surfaces 263b of the claw portions 263 forms a straight line with a constant inclination, and is an inclined surface facing diagonally upward. More specifically, each of the tip surfaces 263b of the claw portions 263 is an inclined surface inclined at a predetermined angle θ1 and facing upward relative to a line segment extending in the vertical direction (Z direction).

Meanwhile, each of the bottom surfaces 253b of the groove portions 253 also forms a straight line with a constant inclination in the vertical cross-section, and is an inclined surface facing diagonally downward. More specifically, each of the bottom surfaces 253b of the groove portions 253 is an inclined surface inclined at the predetermined angle θ1 and facing downward relative to the line segment extending in the vertical direction (Z direction). That is, the tip surfaces 263b of the claw portions 263 and the bottom surfaces 253b of the groove portions 253 are substantially parallel surfaces. It can be said that the bottom surfaces 253b of the groove portions 253 are conical side surfaces (conical surfaces) with corners at bottoms in the Z direction.

As illustrated in Fig. 11, the planar projection of the tip surfaces 263b of the claw portions 263 forms a curve whose inner diameter changes monotonically as an angle function, that is, forms a spiral pattern. The planar projection of the tip surfaces 263b of the claw portions 263 forms a spiral pattern centered on the axis of the ring portion 262. Examples of the spiral pattern include an algebraic spiral and a logarithmic spiral, which can generally be generated using computer-aided design (CAD).

In Fig. 11, to clearly illustrate the shapes of the tip surfaces 263b of the claw portions 263 that are composite surfaces, the rate of change in the inner diameter is highlighted. However, the rate of change in the inner diameter of each of the claw portions 263 may be lower in actual use than the example illustrated in Fig. 11. A procedure for a method for determining the rate of change may be the same as that for the method for determining the lead of each of the helical surfaces 263a in the first embodiment.

As described above, the tip surfaces 263b of the claw portions 263 are conical and helical composite surfaces. The inclination angle θ₁ of the tip surface 263b of each of the claw portions 263 in any vertical cross-section is constant throughout the circumferential direction of the ring portion 262 and is identical to the inclination of the bottom surface 253b of the groove portion 253 of each of the cylindrical protrusions 252. In addition, as illustrated in Fig. 10, the top surfaces of the claw portions 263 are different from those in the first embodiment, and are not inclined surfaces and are horizontal surfaces as in the under surfaces.

In addition, it is desirable that the planar projection of the tip surfaces 263b of the claw portions 263 forms a curve whose radius is defined as an angle function as described above. However, the claw portions 263 may be manufactured such that portions or all of the tip surfaces 263b are approximated by an arc or spline. The claw portions 263 of this shape can be manufactured using a method such as a cutting method, a molding method, a three-dimensional modeling, or the like.

In the above-described embodiment, since the top surfaces 263a of the claw portions 263 are helical surfaces, the gaps between the tops surface (helical surfaces) 263a of the claw portions 263 and the inner surfaces (top surfaces) 253a of the groove portions 253 of the cylindrical protrusions 252 change in the vertical direction as the fixing member 260 (ring portion 262) is rotated.

On the other hand, in the third embodiment, since the tip surfaces 263b of the claw portions 263 are composite surfaces as described above, the gaps between the tip surfaces 263b of the claw portions 263 and the bottom surfaces 253b of the groove portions 253 of the cylindrical protrusions 252 change in the horizontal direction as the fixing member 260 (ring portion 262) is rotated.

In other words, in the above-described embodiment, the claw portions 263 are structured such that the positions (heights) of the top surfaces 263a change in the vertical direction in any vertical cross-section. On the other hand, the claw portions 263 are structured such that the inner diameters change in the horizontal direction in any vertical cross-section. That is, in the third embodiment, the structure is provided in which the positions of the tip surfaces 263b of the claw portions 263 change in the horizontal direction in any vertical cross-section.

Even in a case where the claw portions 263 are structured, the measurement container retainer member 250 and the like can be positioned relative to and fixed to the base substrate 230 by the fixing member 260 with high accuracy.

Next, an operation of fixing the measurement container retainer member 250 and the like by the fixing member 260 will be described. First, as indicated by virtual lines in Fig. 11, it is assumed that the cylindrical protrusions 252 are disposed at first positions P1 near end portions (end portions of the fixing member in the rotational direction) of the wall portions 264. In the states, as illustrated in Figs. 11 and 12(a), the tip surfaces 263b of the claw portions 263 are separated from the bottom surfaces 253b of the groove portions 253. That is, the claw portions 263 and the cylindrical protrusions 252 are disposed with gaps between the claw portions 263 and the cylindrical protrusions 252.

It is assumed that, by rotating the fixing member 260 (ring portion 262) from this state, the cylindrical protrusions 252 move relatively to second positions P2, as illustrated in Fig. 11. During this movement, the inner diameter D1 of each of the claw portions 263 gradually decreases, that is, the positions of the tip surfaces 263b of the claw portions 263 move in the horizontal direction. Therefore, the gaps between the claw portions 263 and the cylindrical protrusions 252 become narrow. In a state where the cylindrical protrusions 252 are positioned at the second positions P2, the bottom surfaces 253b of the groove portions 253 of the cylindrical protrusions 252 are in contact with the tip surfaces 263b of the claw portions 263.

Further, when the fixing member 260 is rotated with any torque, the tip surfaces 263b of the claw portions 263 are pressed against the bottom surfaces 253b of the groove portions 253. Loads applied to the bottom surfaces 253b of groove portions 253 from the tip surfaces 263b of the claw portions act in the vertical direction due to the inclinations of the bottom surfaces 253b of the groove portions 253 and the tip surfaces 263b of the claw portions 263, and loads that push the cylindrical protrusions 252 vertically upward are generated. That is, the loads that push the measurement container retainer member 250 upward in the vertical direction are generated. When the torque applied to rotate the fixing member 260 balances with the frictional forces at the contact portions between the tip surfaces 263b of the claw portions 263 and the bottom surfaces 253b of the groove portions 253, the rotation of the fixing member 260 is stopped, and the measurement container retainer member 250 is fixed to the base substrate 230.

As described above, in the configuration according to the present embodiment, the photodetector retainer member 220, the base substrate 230, and the measurement container retainer member 250 can be fixed at reproducible positions using a simple method that does not require a tool for attachment and removal, as in the above-described embodiments.

Further, the detection device 200 according to each of the above-described embodiments can fix the measurement container at a reproducible position using a simple method that does not require a tool for attachment and detachment. This enables quick replacement of the measurement container 240. Moreover, the high reproducibility of the installation position of the measurement container 240 contributes to reducing a variation in analysis results.

In the configuration according to the third embodiment, the planar projection of the tip surfaces 263b of the claw portions 263 preferably forms a curve whose radius is defined as an angle function as described above, but is not limited thereto. The tip surfaces 263b of the claw portions 263 may be formed as curved surfaces capable of generating loads that push the cylindrical protrusions 252 upward in the vertical direction when the claw portions 263 slide within the groove portions 253 when the fixing member 260 is rotated.

In addition, in the third embodiment, the configuration in which the tip surfaces 263b of the claw portions 263 and the bottom surfaces 253b of the groove portions 253 are inclined surfaces at the predetermined angle θ1 is described as an example. However, the configuration of these surfaces is not limited thereto. For example, the inclination angles of the tip surfaces 263b of the claw portions 263 and the under surfaces 253b of the groove portions 253 need not necessarily be identical. In addition, either the tip surfaces 263b of the claw portions 263 or the bottom surfaces 253b of the groove portions 253 may be formed as inclined surfaces. In this case, the photodetector retainer member 220, the base substrate 230, and the measurement container retainer member 250 can be fixed.

### (Other Embodiment)

The technology of the present disclosure has been described in detail based on each of the embodiments. However, it goes without saying that the technology of the present disclosure is not limited to the embodiments described above and may be modified in various ways without departing from the gist of the present disclosure.

It should be noted that the technology of the present disclosure is not limited to the embodiments described above, and includes various modifications. For example, the examples described above have been described in detail to simply describe the technology of the present disclosure, and are not necessarily required to include all the described configurations.

In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

100: automatic analyzer, 110: analysis unit, 111: conveyance mechanism, 112: sample probe, 113: tip attachment/detachment unit, 114: tip magazine, 115: reaction container magazine, 116: tip/reaction container transfer mechanism, 117: incubator, 118: reagent disk, 119: reagent dispensing probe, 120: reagent probe cleaning unit, 121: magnetic particle stirring mechanism, 122: magnetic particle stirring mechanism cleaning unit, 123: detection device dispensing probe, 124: sample container, 125: opening portion, 126: reagent container, 130: control unit, 150: input unit, 170: display device, 200: optical emission spectrometry detection device (detection device), 210: photodetector, 220: photodetector retainer member (first member), 221: insertion hole, 222: large-diameter portion, 230: base substrate, 240: measurement container, 241: supply chamber, 250: measurement container retainer member (second member), 251: storage section, 252: cylindrical protrusion (protrusion), 253: groove portion, 260: fixing member (third member), 261: through-hole, 262: ring portion, 263: claw portion, 264: wall portion, 265: handle, 270: contact portion

## Claims

1. An optical emission spectrometry detection device that includes a photodetector that detects light emitted from a sample to be measured, the optical emission spectrometry detection device comprising:
a first member that has a cylindrical shape and has an insertion hole that penetrates in a vertical direction and in which the photodetector is inserted;
a base substrate disposed on a lower side of the first member in the vertical direction;
a second member that has a supply chamber to which the sample is supplied, and that is disposed on a lower side of the base substrate in the vertical direction; and
a third member that is in contact with a top surface of the first member around the insertion hole and has a plurality of claw portions that slide relative to the second member, wherein
when the third member is rotated in a state where the third member is in contact with the top surface of the first member, the plurality of claw portions are engaged with the second member, and the first member and the second member are fixed via the third member.

2. The optical emission spectrometry detection device according to claim 1, wherein
the second member has a plurality of cylindrical protrusions arranged on a same circumference around the supply chamber and protruding toward the first member,
each of the protrusions has a groove portion extending in a circumferential direction of the protrusion around an outer surface of the protrusion,
the third member has a ring portion disposed around the first member,
the plurality of claw portions protrude from an outer periphery of the ring portion toward the protrusions, and
when the third member is rotated, the plurality of claw portions are fitted into the groove portions of the respective protrusions and are engaged with the second member.

3. The optical emission spectrometry detection device according to claim 2, wherein
top surfaces of the claw portions are helical surfaces, and
when the third member is rotated, the top surfaces of the claw portions slide relative to top surfaces of the groove portions, and the claw portions are engaged with the second member.

4. The optical emission spectrometry detection device according to claim 3, wherein
the third member has a plurality of wall portions protruding from the outer periphery of the ring portion toward the base substrate,
lower end surfaces of the wall portions are helical surfaces, and
the claw portions are disposed on the lower end surfaces of the wall portions.

5. The optical emission spectrometry detection device according to claim 2, wherein
the base substrate has fitting holes into which the protrusions are fitted, and
the plurality of claw portions are engaged with the second member on the first member side relative to the base substrate.

6. The optical emission spectrometry detection device according to claim 2, wherein
tip surfaces of the claw portions are formed in a spiral pattern in a horizontal direction, and
when the third member is rotated, the tip surfaces of the claw portions slide relative to bottom surfaces of the groove portions, and the claw portions are engaged with the second member.

7. The optical emission spectrometry detection device according to claim 6, wherein
the tip surfaces of the claw portions are inclined surfaces facing diagonally upward.

8. The optical emission spectrometry detection device according to claim 6, wherein
the bottom surfaces of the groove portions are inclined surfaces facing diagonally downward.

9. An automatic analyzer comprising:
a reagent dispensing probe that dispenses a reaction reagent into a reaction container;
an optical emission spectrometry detection device including a photodetector that detects light emitted from a sample to be measured;
a detection device dispensing probe that dispenses a reaction solution in the reaction container as the sample to the optical emission spectrometry detection device; and
a display device that displays a measurement result obtained by the optical emission spectrometry detection device, wherein
the optical emission spectrometry detection device includes:
a first member that has a cylindrical shape and has an insertion hole that penetrates in a vertical direction and in which the photodetector is inserted;
a base substrate disposed on a lower side of the first member in the vertical direction;
a second member that has a supply chamber to which the sample is supplied, and that is disposed on a lower side of the base substrate in the vertical direction; and
a third member that is in contact with a top surface of the first member around the insertion hole and has a plurality of claw portions that slide relative to the second member,
when the third member is rotated in a state where the third member is in contact with the top surface of the first member, the plurality of claw portions are engaged with the second member, and the first member and the second member are fixed via the third member.

## Amended claims

### Amended claims under Art. 19.1 PCT

1. (Amended) An optical emission spectrometry detection device that includes a photodetector that detects light emitted from a sample to be measured, the optical emission spectrometry detection device comprising:
a first member that has a cylindrical shape and has an insertion hole that penetrates in a vertical direction and in which the photodetector is inserted;
a base substrate disposed on a lower side of the first member in the vertical direction;
a second member that has a supply chamber to which the sample is supplied, and that is disposed on a lower side of the base substrate in the vertical direction; and
a third member that is in contact with a top surface of the first member around the insertion hole and has a plurality of claw portions that slide relative to the second member, wherein
when the third member is rotated in a state where the third member is in contact with the top surface of the first member, the plurality of claw portions are engaged with the second member, and the first member and the second member are fixed via the third member,
the second member has a plurality of cylindrical protrusions arranged on a same circumference around the supply chamber and protruding toward the first member,
each of the protrusions has a groove portion extending in a circumferential direction of the protrusion around an outer surface of the protrusion,
the third member has a ring portion disposed around the first member,
the plurality of claw portions protrude from an outer periphery of the ring portion toward the protrusions, and
when the third member is rotated, the plurality of claw portions are fitted into the groove portions of the respective protrusions and are engaged with the second member.

2. (Deleted)

3. (Amended) The optical emission spectrometry detection device according to claim 1, wherein
top surfaces of the claw portions are helical surfaces, and
when the third member is rotated, the top surfaces of the claw portions slide relative to top surfaces of the groove portions, and the claw portions are engaged with the second member.

4. The optical emission spectrometry detection device according to claim 3, wherein
the third member has a plurality of wall portions protruding from the outer periphery of the ring portion toward the base substrate,
lower end surfaces of the wall portions are helical surfaces, and
the claw portions are disposed on the lower end surfaces of the wall portions.

5. (Amended) The optical emission spectrometry detection device according to claim 1, wherein
the base substrate has fitting holes into which the protrusions are fitted, and
the plurality of claw portions are engaged with the second member on the first member side relative to the base substrate.

6. (Amended) The optical emission spectrometry detection device according to claim 1, wherein
tip surfaces of the claw portions are formed in a spiral pattern in a horizontal direction, and
when the third member is rotated, the tip surfaces of the claw portions slide relative to bottom surfaces of the groove portions, and the claw portions are engaged with the second member.

7. The optical emission spectrometry detection device according to claim 6, wherein
the tip surfaces of the claw portions are inclined surfaces facing diagonally upward.

8. The optical emission spectrometry detection device according to claim 6, wherein
the bottom surfaces of the groove portions are inclined surfaces facing diagonally downward.

9. (Amended) An automatic analyzer comprising:
a reagent dispensing probe that dispenses a reaction reagent into a reaction container;
an optical emission spectrometry detection device including a photodetector that detects light emitted from a sample to be measured;
a detection device dispensing probe that dispenses a reaction solution in the reaction container as the sample to the optical emission spectrometry detection device; and
a display device that displays a measurement result obtained by the optical emission spectrometry detection device, wherein
the optical emission spectrometry detection device includes:
a first member that has a cylindrical shape and has an insertion hole that penetrates in a vertical direction and in which the photodetector is inserted;
a base substrate disposed on a lower side of the first member in the vertical direction;
a second member that has a supply chamber to which the sample is supplied, and that is disposed on a lower side of the base substrate in the vertical direction; and
a third member that is in contact with a top surface of the first member around the insertion hole and has a plurality of claw portions that slide relative to the second member,
when the third member is rotated in a state where the third member is in contact with the top surface of the first member, the plurality of claw portions are engaged with the second member, and the first member and the second member are fixed via the third member,
the second member has a plurality of cylindrical protrusions arranged on a same circumference around the supply chamber and protruding toward the first member,
each of the protrusions has a groove portion extending in a circumferential direction of the protrusion around an outer surface of the protrusion,
the third member has a ring portion disposed around the first member, the plurality of claw portions protrude from an outer periphery of the ring portion toward the protrusions, and
when the third member is rotated, the plurality of claw portions are fitted into the groove portions of the respective protrusions and are engaged with the second member.
